# EUROPEAN PATENT APPLICATION

(11) **EP 2 505 829 A1**
(43) Date of publication of application: **03.10.2012**
(21) Application number: 10832680.2
(22) Date of filing: 26.11.2010
(51) Int. Cl.: F03D 11/00, B64C 11/18

(54) **CONCAVE BLADE FOR WIND TURBINE**

(30) Priority: 27.11.2009 ES 200902248
(71) Applicant: Gamón Polo, Vicente María, 20302 Irún (Guipúzcoa) (ES)
(72) Inventor: Gamón Polo, Vicente María, 20302 Irún (Guipúzcoa) (ES)
(74) Representative: Cabinet Plasseraud
(86) International application number: PCT/ES2010/000479
(87) International publication number: WO 2011/064419

(57) **Abstract**

The present invention relates to a concave blade for a wind generator, formed by a body (1) determined by a surface defining a concavity (3), with a flattened part (2) at one end for being fixed by means of said flattened part (2) in a radial position on a support disc.

## Description

### Field of the Art

The present invention relates to harnessing renewable energies and in particular to wind power, proposing a blade for a wind generator made with configuration features making it particularly advantageous for harnessing the force of the wind as driving means to operate an electric generator.

### State of the Art

There is an increasing number of technological developments aimed at making the use of renewable energies to generate energies for consumption, such as electric power and thermal power, cost-effective, highlighting in that sense studies which are being conducted in the field of wind power.

Capturing the force of the wind to convert it into electric power is performed conventionally by means of wind generators formed by one or more blade rotors which are actuated by the action of the wind, producing a rotational movement which is used to move the shaft of an electric generator.

Blade rotors of conventional wind generators use aerodynamically shaped large-sized blades such that when the wind impacts said blades it creates a cross slip flow on them, giving rise to a rotational direction component in the rotor in which they are equipped.

Said shape and arrangement of the blades of wind rotors require precise orientation of the blades depending on wind force and direction such that given the spontaneous and undetermined variability of said wind factors, constant wind rotor and blade orientation control is necessary, for which very complicated and costly functional installations are required.

### Object of the Invention

According to the invention, a blade is proposed which has been provided with a structural shape having very advantageous features to capture the action of the wind, such that it allows very effectively harnessing wind force to actuate the operation of an electric generator with high production efficiency and a very simple installation.

This blade object of the invention is formed by a semicylindrical surface flattened at one end such that it defines a concavity which progressively widens from the flat end part, that flat end part forming a base for anchoring the blade in the application assembly.

The blade thus formed is fixed by the flat end part on a support disc on which a set of at least three blades is incorporated in the same manner, distributed in a uniform circular manner, forming a wind rotor which can be incorporated on an operating shaft of an electric generator.

Three or more blades can be arranged in each wind rotor, all with the concavity in the same direction, and one or more wind rotors can be incorporated in the shaft intended to be actuated, all arranged with the concavity of their blades oriented in the same direction, said shaft being able to be arranged coupled directly with respect to an electric generator or through a remote transmission.

A wind generator is thereby obtained in which the blades of the wind rotors allow capturing the wind through the concave part, generating a rotation force of the wind rotor which is much greater than that which the wind causes when it impacts the convex part of the blades, such that in the set of each wind rotor the wind produces a resulting rotation force in the direction in which the blades receive the wind through the concave part, giving rise to a rotation which can be used to operate an electric generator.

With concave blades of this type object of the invention, capturing the wind only requires the orientation of the wind rotors so that the blades are perpendicular to the wind, which can be determined by means of electronic control or autonomously by the action of the wind itself by means of a weathervane, such that the installation of the assembly is further simpler than that of conventional wind generators.

### Description of the Drawings

Figure 1 shows a front perspective view of a blade according to the object of the invention.
Figure 2 is a diagram of the application of the proposed blade in a wind generator according to an embodiment.
Figure 3 is an example of another form of application of the proposed blade for operating an electric generator.
Figure 4 is a profile view of the assembly of the preceding figure.
Figure 5 is a plan view of said assembly of Figures 3 and 4.
Figure 6 is an example of the application of the proposed blade in a vertical axis wind generator.
Figure 7 is an example of a wind rotor provided with blades configured according to the invention and formed from a flexible material.
Figure 8 is an exploded perspective view of a concave blade with the same functional features of the invention, with a structural formation embodiment of the concavity of the blade by means of two rotating plates.
Figure 9 is a perspective view of the assembled set of the blade of the preceding figure.

### Detailed Description of the Invention

The object of the invention relates to a blade intended for capturing the action of the wind in wind rotors which actuate a rotational movement for operating an electric generator or similar applications.

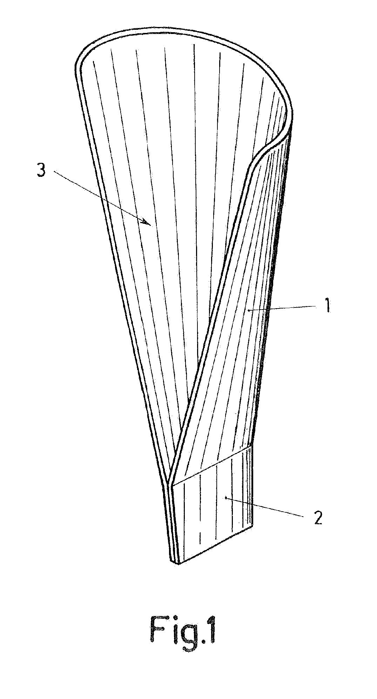

According to Figure 1, the proposed blade comprises a body (1) determined by a semicylindrical-shaped curved surface with a flattened part (2) at one end.

The body (1) of the blade therefore determines a concavity (3) which progressively widens from the flattened part (2), such that said flattened part (2) forms a base to fix the blade in the application assembly.

The blade thus formed is fixed by the flattened part (2) in a radial position on a support disc (4) to form, together with other blades fixed in the same support disc (4), a wind rotor (5) intended for rotating a shaft (6) and through it to actuate the operation of an electric generator (7), for which the concave configuration of the blades is very effective since when the wind impacts the concavity (3) of the blades the latter convert the wind force into a rotating force of the wind rotor (5) with great efficiency.

In the application arrangement each wind rotor (5) can be formed with three or more blades, the blades being arranged in a radial position and distributed uniformly with an angular separation between them on the support disc (4); whereas one or more wind rotors (5) can be incorporated on the shaft (6) to be operated.

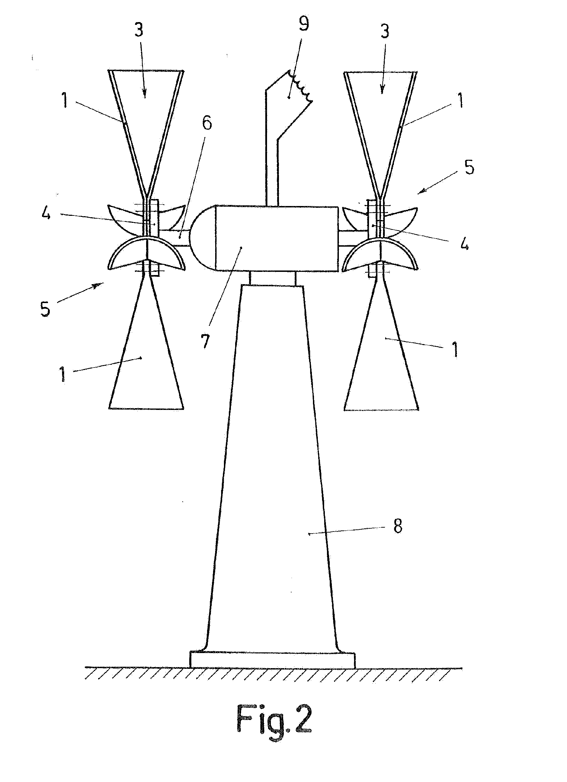

In those conditions, an assembly of two wind rotors (5) can for example, as depicted in Figure 2, be determined on a horizontal shaft (6) coupled directly on an electric generator (7), that set being arranged on a supporting column (8) in an orientation assembly by means of a weathervane (9) or an electronic control so that the body (1) of the blades of the wind rotors (5) is constantly facing the direction of the wind.

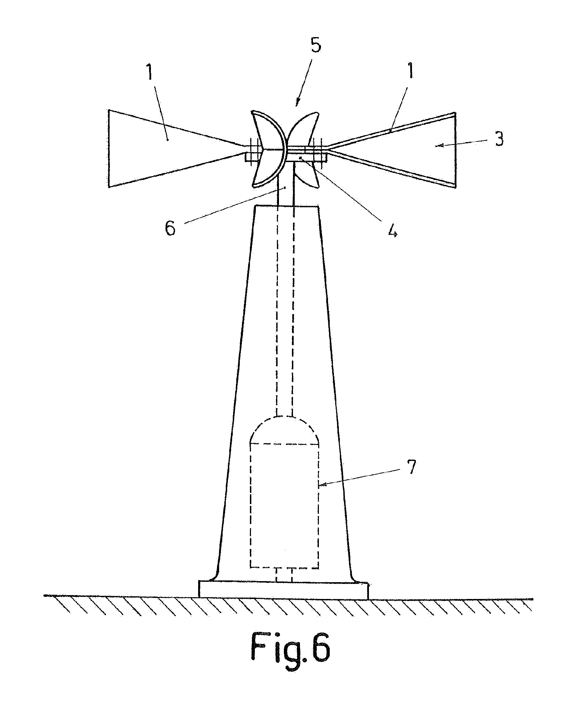

In another form of application, as depicted in Figure 6, one or more wind rotors (5) can be arranged on a vertical shaft (6) coupled with respect to an electric generator (7) located in a lower position.

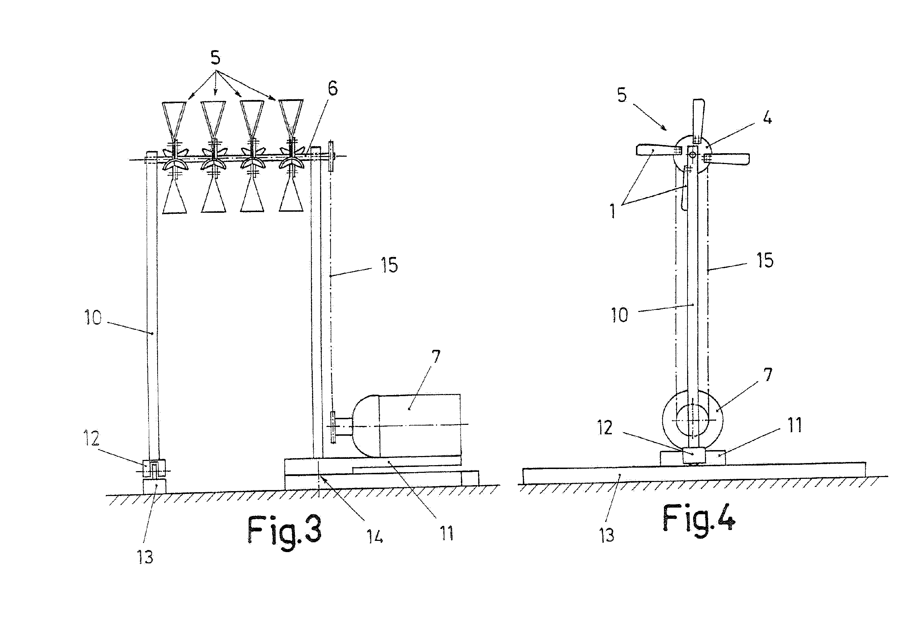

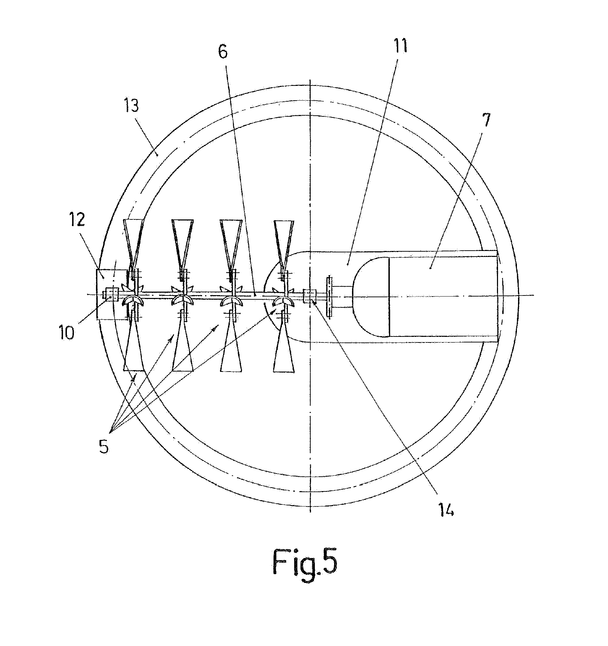

As in Figures 3, 4 and 5, another assembly can be arranging several wind rotors (5) in a horizontal shaft (6) incorporated on a bearing structure (10) in the form of a bridge, said bearing structure (10) being arranged on a rotating platform (11) and supported by means of a trolley (12) on a ring rail (13) concentric with respect to the rotation point (14) of the rotating platform (11), the shaft (6) being linked by means of a chain transmission (15) or the like to an electric generator (7) located on the rotating platform (11).

The mentioned arrangements are application assembly examples of the proposed concave blade, without these examples being limiting, since the blade object of the invention can be arranged in any other arrangement of wind rotors (5) incorporated on a shaft (6) which, directly or through a transmission, is coupled to an electric generator (7) to produce electric power.

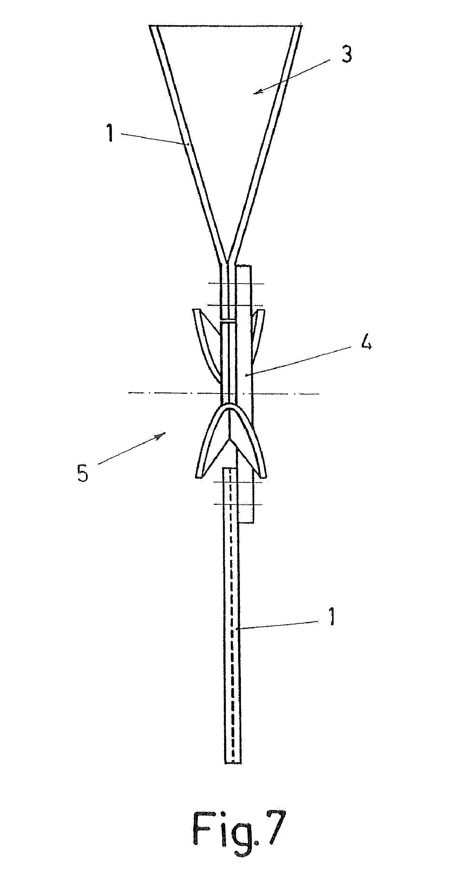

With the mentioned configuration, the blade object of the invention can be made of a flexible material such that, as depicted in Figure 7, upon receiving the wind through the front, the concavity (3) opens, whereby the influence of the wind generates a rotating drive of the corresponding wind rotor (5), whereas when the wind impacts from the rear, the body (1) of the blade closes, thus reducing the resistance against the wind in the direction opposite to the rotational operation of the wind rotor (5).

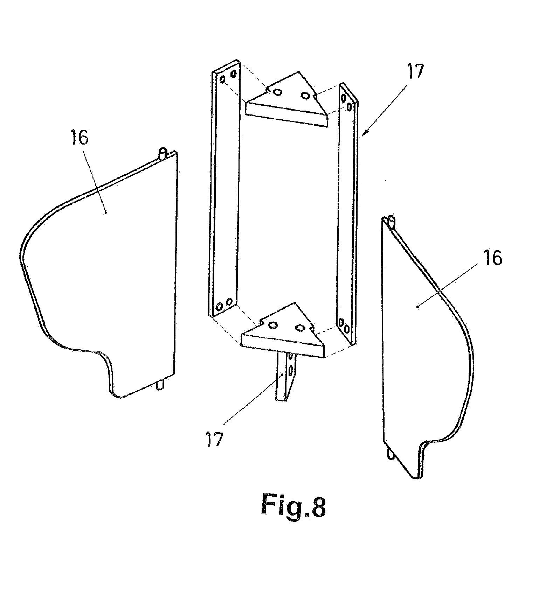

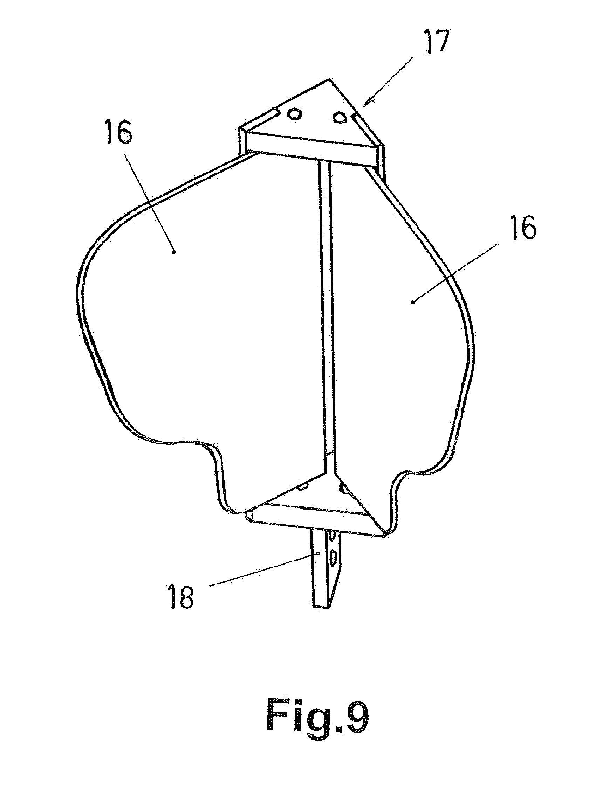

As depicted in Figures 8 and 9, according to another embodiment the body (1) of the blade can be formed by two rigid plates (16), each arranged in an individual freely rotating assembly on a support frame (17), said plates (16) being able to rotate between a closed position facing one another and an open position in which there is a concavity (3) between both plates (16), the support frame (17) being provided at the lower end with a prolongation (18) for securing the blade on the assembly support disc (4).

This embodiment of the blade creates the same effect as the blade made of a flexible material, i.e., when the wind impacts from the front it causes the concavity (3) to open, whereas when the wind impacts from the rear the set of plates (16) closes.

For the correct operation in that blade opening and closing operation depending on the incidence of the wind from the front or rear, it is provided that the plates (16) are associated with a synchronism ratio with respect to one another in the rotating assembly, for example by means of a gear between pinions (not depicted) integral thereto, or any another form of synchronism capable of making said plates (16) rotate at the same time in the blade opening and closing movements.

This embodiment further allows applying the blade in rotors operated by the movement of water, such as waves or currents, in the same operating conditions as with rotors operated by the wind.

## Claims

1. A concave blade for a wind generator, of the type intended to be incorporated in wind rotors operating an electric generator, **characterised in that** it comprises a body (1) determined by a semicylindrical-shaped curved surface, with a flattened part (2) at one end, defining a concavity (3) which progressively widens from the flattened part (2), said flattened part (2) being fixed in a support disc (4), with respect to which the body (1) of the blade is in a radial position.

2. The concave blade for a wind generator according to claim 1, **characterised in that** three or more blades are arranged on a support disc (4) distributed in a circular manner equidistant to one another, with the concavity (3) of all the blades oriented in the same direction.

3. The concave blade for a wind generator according to claims 1 and 2, **characterised in that** one or more sets of blades are arranged on a vertical or horizontal shaft (6) with the concavity (3) of all of them in the same direction to operate that shaft (6) in rotation when the wind impacts said concavity (3) of the blades.

4. The concave blade for a wind generator according to claim 1, **characterised in that** the body (1) determining the concavity (3) is formed with a flexible material, such that when the wind impacts the concavity (3) from the front it opens, whereas when the wind impacts from the rear said concavity (3) closes.

5. The concave blade for a wind generator according to claim 1, **characterised in that** the body (1) is formed by two rigid plates (16) arranged in an individual freely rotating assembly on a support frame (17), with the possibility of said plates (16) rotating between a closed position facing one another and an open position in which there is a concavity (3) between both plates (16).
